# FASCICULE DE BREVET EUROPEEN

(11) **EP 0 515 238 B1**
(45) Date de publication et mention de la délivrance du brevet: **03.03.1999**
(21) Numéro de dépôt: 92401155.4
(22) Date de dépôt: 23.04.1992
(51) Int. Cl.: G06F 5/06

(54) **Dispositif et méthode pour la gestion de plusieurs files d'attente indépendantes dans un espace mémoire commun et banalisé**
Einrichtung und Verfahren zum Verwalten mehrerer unabhängiger Warteschlangen in einem gemeinschaftlich und universell nutzbaren Speicherbereich
Management device and method for multiple independent queues in a common general purpose memory space

(30) Priorité: 23.05.1991 FR 9106674
(43) Date de publication de la demande: 25.11.1992
(73) Titulaire: SEXTANT AVIONIQUE, 92366 Meudon la Forêt Cédex (FR)
(72) Inventeur: Pitot, Christian, F-92100 Boulogne (FR)
(74) Mandataire: de Saint-Palais, Arnaud Marie

(56) Documents cités:
- EP-A- 0 273 083
- WO-A-84/00836
- IBM TECHNICAL DISCLOSURE BULLETIN, vol.32, no.3B, 08/89, page 488 - 492, 'ALGORITHM FOR MANAGING MULTIPLE FIFO QUEUES FROM A SINGLE SHARED RANDOM ACCESS MENORY'

## Description

La présente invention concerne un dispositif et un procédé pour la gestion de plusieurs files d'attente indépendantes dans un espace mémoire commun et banalisé, sans allocation statique, a priori, d'une partie de l'espace alloué à chaque file d'attente.

Elle a plus particulièrement pour objet un tel dispositif et procédé permettant une allocation dynamique des cases mémoire au fur et à mesure des besoins, de manière à assurer une optimisation globale de la ressource mémoire.

Elle s'adresse principalement à des applications dans lesquelles l'ordre de dépilement des files d'attente n'est pas forcément le même que l'ordre d'empilement, étant entendu qu'une identité entre ces deux ordres pourra être éventuellement garantie moyennant des contraintes d'utilisation appropriées.

On sait qu'un dispositif de ce genre doit comprendre des moyens permettant de déterminer à tout instant les positions de l'espace mémoire qui sont libres et celles qui sont utilisées par les files d'attente, ainsi que l'appartenance des positions déjà utilisées, à l'une ou l'autre des files d'attente.

Ce dispositif doit en outre comprendre des moyens permettant de rechercher, pour chacune des files, le contenu mémoire de la position la plus anciennement réservée, des moyens de libérer cette position mémoire et de la prendre en compte dans la liste des positions mémoire disponibles lorsque son contenu a été pris en compte (dépilé).

Le document "IBM TECHNICAL DISCLOSURE BULLETIN, Vol. 32, no. 3B, August 1989, pages 488 - 492, A.P ENGBERSEN: Algorithm for managing multiple first-in, first-out queues from a single shared random-access memory" décrit un dispositif traditionnel faisant intervenir autant de pointeurs de lecture et d'écriture que de files d'attente à gérer, et une seconde mémoire de même capacité que la mémoire commune utilisée par les files d'attentes, dans laquelle chaque position correspond à une position respective utilisée par une file d'attente dans la mémoire commune, et pointe sur la position de l'élément suivant de la file d'attente. Ce dispositif présente l'inconvénient d'utiliser un espace mémoire important par rapport à l'espace mémoire utilisable par les files d'attentes, et d'impliquer un processus complexe de mise à jour de la seconde mémoire et des différents pointeurs.

La présente invention a pour but de proposer un dispositif structurellement simple et efficace, qui ne met pas en oeuvre de mécanisme à base de listes de pointeurs chaînes comme c'est le cas dans les solutions traditionnelles.
Pour parvenir à ces résultats, le dispositif selon l'invention telle que définie dans la revendication 1 met en oeuvre, avec un séquencement approprié :
- un ensemble de registres pointeurs de lecture à raison de un par file d'attente, chacun de ces pointeurs conservant l'adresse codée en binaire de la dernière position lue de l'espace mémoire utilisé par la file d'attente correspondante.

Selon l'invention, ce dispositif est caractérisé en ce qu'il comprend :
- un ensemble de vecteurs d'appartenance de l'espace mémoire à chaque file d'attente, à raison de un vecteur par file d'attente, chaque vecteur comportant un nombre n de bits indiquant respectivement les positions de l'espace mémoire occupées par la file d'attente correspondante,
- des moyens pour effectuer la mise à jour ) partir des vecteurs d'appartenance d'un vecteur d'utilisation de l'espace mémoire, dont chacun des bits indique le statut, libre ou occupé, d'une position respective de l'espace mémoire,
- un registre pointeur d'écriture qui conserve l'adresse codée en binaire de la position de l'espace mémoire où a eu lieu la dernière écriture, et
- un circuit de logique combinatoire (LC) d'évaluation du plus proche successeur selon une relation d'ordre cyclique de l'ensemble des ressources élémentaires disponibles dans l'espace mémoire, pour évaluer, avant chaque écriture dans une file d'attente déterminée, l'adresse d'une position libre constituant le plus proche successeur de la position où a eu lieu la dernière écriture, en confrontant le contenu du registre pointeur d'écriture aux adresses des positions libres indiquées par le vecteur d'utilisation, et avant chaque lecture dans une file d'attente déterminée, l'adresse d'une position occupée constituant le plus proche successeur de la position qui a été lue pour la dernière fois dans la file d'attente de lecture de la file d'attente déterminée, en confrontant le contenu du registre pointeur de lecture de la file d'attente déterminée aux adresses des positions occupées par la file d'attente déterminée, indiquée par le vecteur d'appartenance de la file d'attente déterminée,
- des moyens logiques pour déclencher la mémorisation de l'adresse déterminée par le circuit de logique combinatoire (LC) avant chaque écriture dans le registre pointeur d'écriture, et avant chaque lecture dans le registre pointeur de lecture correspondant à la file d'attente à lire, et
- des moyens pour effectuer, à la suite de chaque lecture ou écriture dans une file d'attente, la mise à jour du vecteur d'appartenance correspondant à la file d'attente qui vient de faire l'objet de la dernière écriture ou lecture, et du vecteur d'utilisation de l'espace mémoire.

Il importe de noter que dans la définition qui précède, ainsi que dans la suite de la description, un "vecteur" est un mot binaire de n bits à chacun desquels est associée la signification "occupé" ou "libre" d'une ressource matérielle, ce vecteur étant modifiable bit à bit.

Il apparaît donc que le dispositif précédemment décrit présente l'avantage de permettre d'utiliser toutes les ressources mémoire, une même ressource pouvant être utilisée par n'importe quelle file d'attente.

L'invention telle que définie dans la revendication 6 concerne également le procédé mis en oeuvre par le dispositif, ce procédé comporte les séquences suivantes :
- une séquence d'écriture dans une file d'attente déterminée, comprenant la prise en compte de l'adresse de la position occupée de l'espace mémoire où a eu lieu la dernière écriture indiquée par le pointeur d'écriture, la comparaison de cette adresse aux adresses des positions libres de l'espace mémoire indiquées par le vecteur d'utilisation, de manière à déterminer l'adresse d'une position libre constituant le plus proche successeur, selon la relation d'ordre cyclique, de ladite position occupée, l'allocation de l'adresse de cette position libre au pointeur d'écriture, l'écriture à cette adresse, puis la mise à jour du vecteur d'appartenance correspondant à la file d'attente qui vient de faire l'objet d'une écriture et, du vecteur d'utilisation,
- une séquence de lecture dans une file d'attente déterminée, comprenant la prise en compte de la position du dernier mot lu dans la file d'attente considérée, indiquée par le pointeur de lecture de la file d'attente déterminée, la recherche, parmi les positions de l'espace mémoire occupées par la file d'attente déterminée, indiquées par le vecteur d'appartenance de la file d'attente déterminée, du plus proche successeur, selon la relation d'ordre cyclique, à cette dernière position, l'allocation de l'adresse de cette position au pointeur de lecture correspondant à la file d'attente considérée, de manière à procéder à la lecture de cette position de l'espace mémoire et, parallèlement, la mise à jour du vecteur d'appartenance correspondant à la file d'attente déterminée et du vecteur d'utilisation.

Selon une caractéristique de l'invention, le processus d'évaluation du plus proche successeur est basé sur une relation d'ordre cyclique de l'ensemble des ressources élémentaires E (de cardinal n) disponibles dans l'espace mémoire alloué à la gestion des files d'attente, cette relation étant telle que chaque élément de l'ensemble E ait un prédécesseur unique et un successeur unique.

Les éléments de l'ensemble E sont alors ordonnés selon cette relation d'ordre en une chaîne rebouclée et disposant d'une orientation.

Si on ouvre la chaîne matérialisant la relation d'ordre cyclique entre un élément quelconque de E et son prédécesseur immédiat, on peut définir une relation d'ordre strict (notée > ) sur l'ensemble E dont e est le plus petit élément.

Le plus proche successeur de e dans le sous ensemble E' est l'élément e' de E' (noté PPS_{E'}(e)) tel que, quel que soit l'élément a appartenant à E' et distinct de E, on ait la relation a ≥ e' > e. Cette définition devra être utilisée dans la suite chaque fois qu'il sera question de la notion de "plus proche successeur".

Un mode d'exécution de l'invention sera décrit ci-après, à titre d'exemple non limitatif, avec référence aux dessins annexés dans lesquels :
La figure 1 est un schéma théorique illustrant la structure d'un circuit interface entre un processeur et plusieurs voies de transmission (émission/réception), cet interface assurant la gestion des files d'attente associées à chacune de ces voies ;
La figure 2 est un schéma synoptique du circuit de gestion utilisé dans l'interface représenté figure 1 ;
La figure 3 est un schéma du circuit de détermination du plus proche successeur de la position mémoire occupée la dernière fois ;
La figure 4 est un schéma du circuit de détermination des positions libres ou réservées, selon le cas, de l'espace mémoire utilisé dans le circuit de la figure 2 ;
La figure 5 est une représentation schématique, dans l'espace du circuit représenté figure 3.

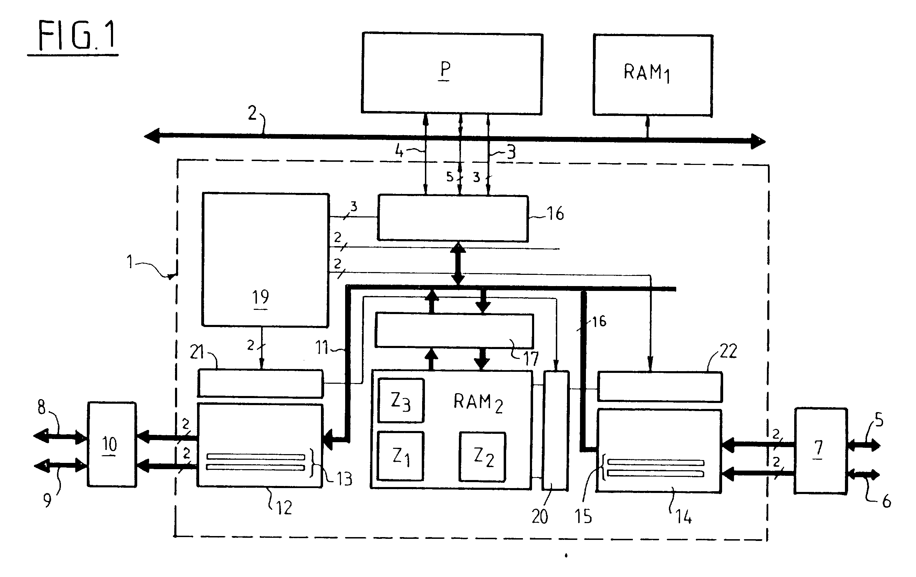

Le circuit représenté sur la figure 1 est destiné à assurer l'interface d'entrée/sortie entre des lignes de transmission de type série sur lesquelles circulent des informations conformes à la norme ARINC 429 en vigueur dans l'aéronautique, qui se présentent sous la forme d'une succession de mots de trente deux bits comprenant chacun, successivement :
- un premier nombre de huit bits (de O à 7) définissant une étiquette ou "label",
- un second nombre de deux bits (8 et 9) servant à identifier la source ou la destination du mot (SDI),
- un troisième nombre de vingt et un bits (10 à 30) contenant les données à transmettre et,
- un bit de parité (bit 31).

Dans cet exemple, le circuit d'interface, qui est représenté par un bloc 1, est connecté, d'une part à une unité locale à microprocesseur P associé à une mémoire vive RAM₁ par l'intermédiaire d'un BUS de données 2, de contrôle 3 et d'adressage 4 et, d'autre part à deux voies 5, 6 de réception d'informations conformes à la norme ARINC 429, par l'intermédiaire d'un démodulateur 7, et à deux voies 8, 9 d'émission d'informations par l'intermédiaire d'un modulateur de ligne 10.

Ce circuit fait plus précisément intervenir, connectés par un BUS interne 11 :
- un bloc d'émission 12 connecté au modulateur 10 et utilisant une mémoire tampon formée de deux registres 13 de seize bits permettant de stocker le demi-mot en cours d'émission sur chacune des voies (ces tampons constituant un prolongement de la zone mémoire Z₁ décrite ci-après), dans laquelle les mots correspondant à chacune des voies sont organisés en file d'attente,
- un bloc de réception 14 connecté au démodulateur 7 et utilisant une mémoire tampon formée de deux registres 15 de seize bits permettant d'accumuler les bits des demi-mots ARINC reçus sur chacune des deux voies avant leur transfert dans la zone mémoire Z₂ décrite ci-après,
- un interface de liaison 16 (seize bits) avec l'unité locale à microprocesseur P,
- une mémoire vive RAM₂ associée à un circuit de gestion des données 17, cette mémoire vive pouvant constituer le prolongement des deux mémoires tampon 13, 15,
- un automate 19 servant à piloter un générateur d'adresse 10 associé à la mémoire RAM₂ par l'intermédiaire d'un pointeur d'émission 21 et d'un pointeur de réception 22.

Les mots à émettre sur les voies 8 et 9 sont fournis par le processeur P et stockés dans la zone Z₁ de la RAM₂ avant leur sérialisation.

Cette zone mémoire Z₁ est gérée à la façon d'une pile FIFO, avec allocation dynamique, afin d'optimiser son occupation en fonction de la vitesse de transmission programmée pour chacune des deux voies 8, 9 (la capacité de cette zone mémoire est, par exemple, de trente deux mots ARINC pour l'ensemble des deux voies).

Le chargement d'un mot ARINC (trente deux bits) dans la zone mémoire Z₁ est déclenché par l'unité centrale P et s'effectue en deux temps successifs : transfert des seize bits de poids faible puis des seize bits de poids fort. La sérialisation d'un mot ARINC sur une voie 8, 9 désirée ne peut s'effectuer que lorsque :
- ses demi-mots ont été chargés par l'unité centrale (processeur P) dans la zone mémoire Z₁,
- l'ensemble des mots précédemment transmis vers cette voie ont été totalement émis.

L'émission débute sur une voie dès qu'un mot complet a été chargé dans une paire de mots de seize bits d'adresses consécutives allouée en zone Z₁ à la voie considérée par le dispositif d'allocation dynamique contenu dans le pointeur d'émission 21.

La réception des mots ARINC provenant des voies 5, 6 s'effectue comme suit :

Chaque mot reçu ayant satisfait aux contrôles demandés est mis en mémoire, après substitution de son trente deuxième bit de parité par le numéro de voie sur lequel il est arrivé, dans une zone Z₂ de la mémoire RAM₂ gérée en pile FIFO de capacité de soixante quatre demi-mots ARINC.

La restitution complète d'un mot ARINC ainsi stocké est déclenchée par le processeur P et nécessite deux phases de lecture successives de cette dernière, à savoir :
- une phase de lecture des seize bits de poids faible pf,
- une phase de lecture des seize bits de poids fort PF.

Lorsque la zone de mémoire Z₂ gérée en pile FIFO est vide, les deux lectures déclenchées par l'unité centrale se concluront par la restitution d'un code spécial, par exemple 0000h.

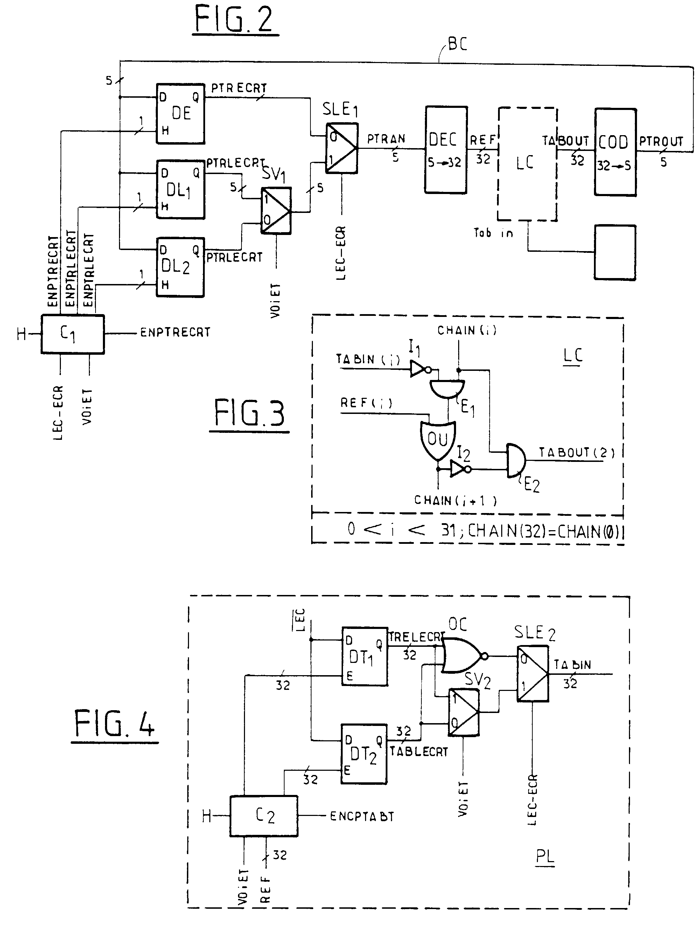

Le circuit de gestion des files d'attente utilisé par l'interface précédemment décrit fait intervenir :
- des moyens permettant d'effectuer la mise à jour d'un vecteur d'utilisation des ressources, ici d'une largeur de trente deux bits, dont chaque bit indique l'état, libre ou occupé, d'une position mémoire et des vecteurs permettant d'indiquer l'appartenance de chaque position mémoire occupée à l'une des files d'attente gérée,
- un registre pointeur d'écriture (matérialisé par la bascule DE sur la figure 2) qui contient l'adresse de la position mémoire où est réalisée une écriture et qui est mise à jour avant chaque nouvelle écriture,
- des registres pointeurs de lecture (matérialisés par des bascules DL₁, DL₂ sur la figure 2), à raison de un par file d'attente gérée, chacun de ces pointeurs indiquant la position du dernier mot qui est lu ou émis sur la voie correspondante, et qui sont mis à jour avant chaque lecture dans la file associée,
- un réseau de logique combinatoire LC destiné à déterminer le plus proche successeur de la position précédemment sélectionnée dans les vecteurs d'utilisation des ressources.

Ce circuit de gestion comprend en outre des moyens logiques (bloc C₁ figure 2) ayant pour but :
- d'une part, d'envoyer, avant chaque écriture, sur l'entrée d'horloge H du registre d'écriture DE, une impulsion d'horloge destinée à provoquer la mise en mémoire de l'adresse de la prochaine écriture, qui a été déterminée par le circuit de logique combinatoire, et
- d'autre part, d'envoyer avant chaque lecture, sur l'entrée d'horloge H du registre de lecture DL₁, DL₂ correspondant à la voie à traiter, une impulsion d'horloge de manière à mémoriser l'adresse de la position mémoire où s'effectuera la prochaine lecture sur la même voie.

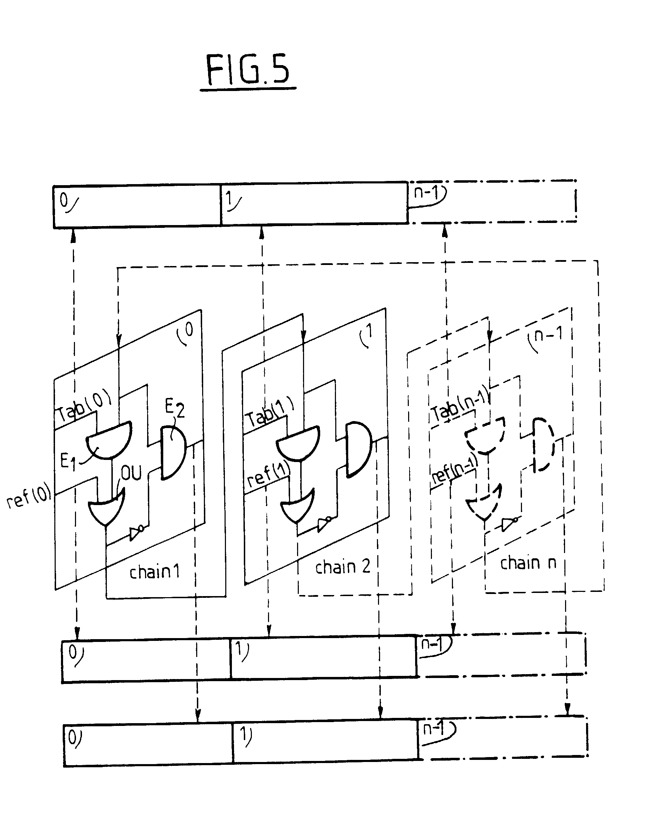

Dans l'exemple représenté sur la figure 2, les registres DE, DL₁, DL₂ sont des registres parallèles à cinq bits qui transmettent les informations qu'ils contiennent, par l'intermédiaire d'un circuit d'aiguillage, à un convertisseur DEC apte à effectuer une conversion 5/32 bits avec un codage 1 parmi 32 (un seul bit à l'état 1 sur les trente deux bits de sortie). Les trente deux sorties de ce convertisseur DEC sont connectées aux trente deux entrées REF du circuit de logique combinatoire LC, de la façon qui sera précisée dans la suite de la description en regard des figures 3 et 5.

Le circuit d'aiguillage utilisé en sortie des registres DE, DL₁, DL₂ comprend deux circuits sélecteurs en cascade, à savoir :
- un circuit sélecteur de voie SV dont les entrées (deux fois cinq) sont respectivement connectées aux sorties des deux registres DL₁, DL₂ et,
- un circuit sélecteur lecture/écriture SLE₁ dont les entrées (deux fois cinq) sont respectivement connectées aux sorties du registre d'écriture DE et aux sorties du sélecteur de voies SV.

Les sorties de ce sélecteur SLE₁ sont respectivement connectées aux cinq entrées du convertisseur DEC.

Les entrées des registres DE, DL₁, DL₂ sont connectées à la sortie d'un convertisseur COD 32/5 bits par l'intermédiaire d'un BUS commun BC à cinq conducteurs.

Les trente deux entrées de ce convertisseur COD qui sont destinées à recevoir l'adresse de la position mémoire du plus proche successeur de la position de référence, cette adresse étant codée selon le code 1 parmi 32, sont reliées aux trente deux sorties TAB OUT du circuit de logique combinatoire.

Tel que représenté sur les figures 3 et 5, ce circuit de logique combinatoire se compose de trente deux circuits élémentaires (circuits 0, 1 ... n-1) comprenant chacun :
- une première porte ET E₁ dont une entrée est connectée, par l'intermédiaire d'un inverseur I₁, à l'une des trente deux sorties TAB IN d'un circuit de détermination des positions selon le cas libres ou occupées par la file considérée de l'espace mémoire PL, et dont la deuxième entrée chain(i) est rebouclée sur une sortie chain(i+1) du circuit élémentaire précédent,
- une porte OU dont une entrée est connectée à la sortie de la première porte ET E₁, E₂ ... Eₙ, et dont l'autre entrée est connectée à l'une des trente deux sorties REF du convertisseur DEC, la sortie de cette porte OU constituant la sortie chain(i+1) qui est reliée à l'entrée chain(i) du circuit élémentaire suivant,
- une deuxième porte ET E₂ dont une entrée est reliée à la sortie de la porte OU par l'intermédiaire d'un inverseur I₂ et dont l'autre entrée est connectée à la deuxième entrée chain(i) du premier circuit ET E₁,
- un rebouclage de la sortie chain(n) du n-1ème et dernier circuit sur l'entrée chain(O) du premier circuit élémentaire.

Le circuit PL de détermination des positions libres ou réservées par la voie considérée de l'espace mémoire comprend, comme représenté sur la figure 4, deux vecteurs DT₁, DT₂ de trente deux bits (un par file d'attente gérée) qui indiquent chacun les positions de la mémoire occupées par la file d'attente correspondante. La mise à jour de ces deux vecteurs DT₁, DT₂ est assurée par un circuit logique approprié C₂. Les entrées D des bascules qui composent ces vecteurs reçoivent un signal représentatif d'une commande de lecture ou d'écriture (lecture → mise à zéro, écriture → mise à 1 du bit correspondant).

Les horloges de chaque bascule constituant le vecteur étant indépendantes et actionnées par la logique C₂ de manière à ce que seule une bascule soit activée à la fois : celle correspondant à la position sur laquelle est effectuée le traitement en cours.

Les sorties de même rang des vecteurs DT₁ et DT₂ sont connectées, d'une part, aux deux entrées respectives d'un circuit OU complémenté OC, et d'autre part, aux deux entrées d'un sélecteur de voie SV₂.

Les sorties de ce circuit OU complémenté OC et de ce sélecteur de voie SV₂ sont reliées aux deux entrées d'un deuxième sélecteur lecture/écriture SLE₂.

La sortie du sélecteur lecture/écriture SLE₂ est connectée à une entrée TAB IN correspondante du circuit de logique combinatoire LC.

Compte tenu du fait que les registres ont chacun trente deux bits, on aura donc trente deux circuits OU complémentés OC, trente deux sélecteurs de voie SV₂ et trente deux sélecteurs lecture/écriture SLE₂ dont les sorties sont respectivement connectées aux trente deux entrées TAB IN.

Il est clair qu'en position écriture, ce circuit de détermination va fournir les positions libres de l'espace mémoire (bits à un des trente deux sorties).

En position lecture, le circuit indiquera sur sa sortie les positions mémoire occupées par la file d'attente associée à la voie correspondante.

Le fonctionnement des circuits précédemment décrits est le suivant :

En position écriture, c'est-à-dire lorsque le processeur P veut écrire dans la file d'attente correspondant à une voie déterminée, il transmet sur les sélecteurs SLE₁, SLE₂, un signal de sélection correspondant à la position écriture et, sur les sélecteurs SV₁, SV₂, un signal de sélection indiquant la voie.

Il dispose, grâce au registre DE, de l'adresse de la position mémoire où s'est effectuée la dernière écriture. Cette adresse est appliquée sur l'entrée REF du circuit de logique combinatoire sous la forme 1 parmi 32.

parallèlement, le circuit PL indique sur les trente deux entrées TAB IN du circuit de logique combinatoire LC, les positions libres de l'espace mémoire alloué aux files d'attente.

Grâce au rebouclage chain(i), chain(i+1), le circuit de logique combinatoire LC va traiter successivement chaque bit de son entrée TAB IN avec son bit correspondant de l'entrée REF(i). Le circuit permet de déterminer parmi les positions libres de l'espace mémoire, celle qui constitue le plus proche successeur de la position indiquée à l'entrée REF du circuit logique LC.

Cette position est indiquée à la sortie TAB OUT du circuit logique, sous la forme d'un mot de trente deux bits code 1 parmi 32.

Le mot présent à la sortie TAB OUT du circuit logique LC est converti en un mot de cinq bits appliqué au BUS commun BC, pour être ensuite mémorisé dans le registre DE.

Le contenu de DE peut alors être utilisé pour pointer dans l'espace mémoire, de manière à procéder à une écriture.

Parallèlement, est mis à jour le vecteur DT₁ ou DT₂ correspondant à la file qui vient de faire l'objet d'une écriture.

En position lecture, c'est-à-dire lorsqu'il veut transmettre une information contenue dans une file d'attente sur une voie correspondante, le dispositif dispose de la position du dernier mot qui vient d'être émis dans cette voie. Le circuit de logique combinatoire LC recherche parmi les positions prises par la voie correspondante, le plus proche successeur de manière à pouvoir l'allouer au pointeur de lecture PTR LEC 1 T, PT LEC φ T pour la lecture à effectuer sur cette file.

Le processus de recherche du plus proche successeur est le même que celui précédemment décrit, à la différence que le circuit PL applique à l'entrée TAB IN un signal représentatif des positions occupées par la file correspondante (et non des positions laissées libres par toutes les files).

Bien entendu, dans le vecteur DT₁, DT₂ correspondant à la file, on remet à zéro le bit qui correspond à la position qui vient d'être libérée.

## Revendications

1. Dispositif pour la gestion de plusieurs files d'attente indépendantes dans un espace mémoire commun et banalisé, sans allocation statique a priori, d'une partie de l'espace alloué à chaque file d'attente, ce dispositif comprenant :
- un ensemble de registres pointeurs de lecture (DL1, DL2) à raison de un par file d'attente, chacun de ces pointeurs conservant l'adresse codée en binaire de la dernière position lue de l'espace mémoire utilisé par la file d'attente correspondante,
caractérisé en ce qu'il comprend :
- un ensemble de vecteurs d'appartenance (DT1, DT2) de l'espace mémoire à chaque file d'attente, à raison de un registre par file d'attente, chaque vecteur comportant un nombre n de bits indiquant respectivement les positions de l'espace mémoire occupées par la file d'attente correspondante,
- un circuit (PL) pour déterminer, à partir des vecteurs d'appartenance (DT1, DT2), un vecteur d'utilisation (TABIN) de l'espace mémoire, dont chacun des bits indique le statut, libre ou occupé, d'une position respective de l'espace mémoire,
- un registre pointeur d'écriture (DE) qui conserve l'adresse codée en binaire de la position de l'espace mémoire où a eu lieu la dernière écriture, et
- un circuit de logique combinatoire (LC) d'évaluation du plus proche successeur selon une relation d'ordre cyclique de l'ensemble des ressources élémentaires disponibles dans l'espace mémoire, pour évaluer :
. avant chaque écriture dans une file d'attente déterminée, l'adresse d'une position libre constituant le plus proche successeur de la position où a eu lieu la dernière écriture en confrontant le contenu du registre pointeur d'écriture (DE) aux adresses des positions libres indiquées par le vecteur d'utilisation (TABIN), et
. avant chaque lecture dans une file d'attente déterminée, l'adresse d'une position occupée constituant le plus proche successeur de la position qui a été lue pour la dernière fois dans la file d'attente déterminée, en confrontant le contenu du registre pointeur de lecture (DL1, DL2) correspondant à la file d'attente déterminée aux adresses des positions occupées par la file d'attente déterminée, indiquées par le vecteur d'appartenance (DT1, DT2) de la file d'attente déterminée,
- des moyens logiques pour déclencher la mémorisation de l'adresse déterminée par le circuit de logique combinatoire (LC) avant chaque écriture dans le registre pointeur d'écriture (DE), et avant chaque lecture dans le registre pointeur de lecture (DL1, DL2) correspondant à la file d'attente à lire, et
- des moyens pour effectuer, à la suite de chaque lecture ou écriture dans une file d'attente, la mise à jour du vecteur d'appartenance (DT1, DT2) correspondant à la file d'attente qui vient de faire l'objet de la dernière écriture ou lecture, et du vecteur d'utilisation (TABIN).

2. Dispositif selon la revendication 1, caractérisé en ce que l'adresse de la position occupée de l'espace mémoire qui a fait l'objet de la dernière écriture est présentée au circuit de logique combinatoire (LC) par l'intermédiaire d'un convertisseur (DEC) sous la forme d'un chiffre binaire de n bits codé en 1 parmi n, n étant le nombre de positions mémoire de l'espace mémoire alloué aux files d'attente.

3. Dispositif selon la revendication 2, caractérisé en ce que le circuit de logique combinatoire (LC) se compose de n circuits élémentaires chacun comprenant la combinaison des éléments suivants, ou une combinaison fonctionnellement équivalente :
- une première porte ET (E₁) dont une entrée est connectée, par l'intermédiaire d'un inverseur (I₁), à l'une des n sorties (TABIN) d'un circuit (PL) de détermination des positions libres de l'espace mémoire, dont la deuxième entrée (chain(i)) est rebouclée sur une sortie (chain(i+1)) du circuit élémentaire précédent, la sortie (chain(n)) du dernier circuit élémentaire étant rebouclée sur l'entrée (chain(0)) du premier circuit élémentaire,
- une porte OU dont une entrée est connectée à la sortie de la première porte ET et dont l'autre entrée est connectée à l'une des n sorties du convertisseur (DEC), la sortie de cette porte OU constituant la sortie (chain(i+1)) qui est reliée à l'entrée (chain(i)) du circuit élémentaire suivant, et
- une deuxième porte ET dont une entrée est reliée à la sortie de la porte OU, par l'intermédiaire d'un inverseur (I₂), et dont l'autre entrée est connectée à la deuxième entrée chain(i) du premier circuit.

4. Dispositif selon la revendication 3 pour la gestion d'au moins deux files d'attente,
caractérisé en ce qu'il comprend au moins deux vecteurs d'appartenance (DT₁, DT₂), à raison de un par file d'attente gérée, qui indiquent chacun les positions de l'espace mémoire occupées par la file d'attente correspondante, et dont les sorties de même rang sont connectées, d'une part, aux deux entrées respectives d'un circuit OU complémenté (OC), et d'autre part, aux deux entrées d'un sélecteur de voie (SV₂), en ce que les sorties de ce circuit OU complémenté (OC) et de ce sélecteur de voie (SV₂) sont reliées aux deux entrées d'un deuxième sélecteur lecture/écriture (SLE₂) et en ce que la sortie du sélecteur lecture/écriture (SLE₂) est connectée à une entrée (TABIN) correspondante du circuit de logique combinatoire (LC).

5. Dispositif selon la revendication 1,
caractérisé en ce que la sortie (TABOUT) du circuit de logique combinatoire (LC) est appliquée à travers un encodeur (COD) de un bit parmi trente-deux vers cinq bits au registre pointeur d'écriture (DE) et aux pointeurs de lecture (DL₁, DL₂), la sortie de ces registres étant connectée à l'entrée (REF) du circuit de logique combinatoire par l'intermédiaire d'un circuit d'aiguillage comprenant au moins un sélecteur de voie (SV₁) et un sélecteur lecture/écriture (SLE₁) suivi d'un dispositif convertisseur (DEC) de cinq bits vers trente-deux bits à raison de un bit à l'état un parmi trente-deux.

6. Procédé pour la gestion de plusieurs files d'attente indépendantes dans un espace mémoire commun et banalisé, sans allocation statique a priori, d'une partie de l'espace alloué à chaque file d'attente, ce procédé mettant en oeuvre
- un ensemble de registres pointeurs de lecture (DL1, DL2) à raison de un par file d'attente, chacun de ces pointeurs conservant l'adresse codée en binaire de la dernière position lue de l'espace mémoire utilisé par la file d'attente correspondante,
caractérisé en ce qu'il met également en oeuvre
- un ensemble de vecteurs d'appartenance (DT1, DT2) de l'espace mémoire à chaque file d'attente, à raison de un vecteur par file d'attente, chaque vecteur comportant un nombre n de bits indiquant respectivement les positions de l'espace mémoire occupées par la file d'attente correspondante,
- un vecteur d'utilisation de l'espace mémoire déduit des vecteurs précédents (DT1, DT2), dont chacun des bits indique le statut, libre ou occupé, d'une position respective de l'espace mémoire,
- un registre pointeur d'écriture (DE) qui conserve l'adresse codée en binaire de la position de l'espace mémoire où a eu lieu la dernière écriture, et
en ce qu'il comporte les séquences suivantes :
- une séquence d'écriture dans une file d'attente déterminée, comprenant la prise en compte de l'adresse indiquée par le pointeur d'écriture (DE), de la position occupée de l'espace mémoire où a eu lieu la dernière écriture, la comparaison de cette adresse aux adresses des positions libres de l'espace mémoire, indiquées par le vecteur d'utilisation (TABIN), de manière à déterminer l'adresse d'une position libre constituant le plus proche successeur, selon une relation d'ordre cyclique de l'ensemble des ressources élémentaires disponibles dans l'espace mémoire, de ladite position occupée, l'allocation de l'adresse de cette position libre au pointeur d'écriture (DE) , l'écriture à cette adresse, puis la mise à jour du vecteur d'appartenance (DT1, DT2) correspondant à la file d'attente déterminée et, du vecteur d'utilisation (TABIN),
- une séquence de lecture dans une file d'attente déterminée, comprenant la prise en compte de la position du dernier mot lu dans la file d'attente déterminée, indiqué par le pointeur de lecture (DL1, DL2) correspondant à la file d'attente déterminée, la recherche, parmi les positions de l'espace mémoire occupées par la file, indiquées par le vecteur d'appartenance (DT1, DT2) correspondant à la file d'attente déterminée, du plus proche successeur selon la relation d'ordre cyclique, à cette dernière position, l'allocation de l'adresse de cette position au pointeur de lecture (DL1, DL2) correspondant à la file d'attente déterminée, de manière à procéder à la lecture de cette position de l'espace mémoire et, parallèlement, la mise à jour du vecteur d'appartenance (DT1, DT2) correspondant à la file d'attente déterminée et du vecteur d'utilisation (TABIN).

## Patentansprüche

1. Vorrichtung zur Verwaltung mehrerer unabhängiger Warteschlangen in einem gemeinsamen und vereinfachten Speicherplatz ohne vorrangige statische Zuordnung eines Teils des jeder Warteschlange zugewiesenen Platzes, wobei diese Vorrichtung umfaßt:
- eine Gruppe von Lesezeiger-Registern (DL1, DL2) in einem Verhältnis von einem pro Warteschlange, wobei jeder dieser Zeiger die binärcodierte Adresse der letzten Position speichert, die von dem von der entsprechenden Warteschlange benutzten Speicherplatz gelesen wurde,
dadurch gekennzeichnet, daß es umfaßt:
- eine Einheit von Vektoren (DT1, DT2) für die Zugehörigkeit des Speicherplatzes zu jeder Warteschlange in einem Verhältnis von einem Register pro Warteschlange, wobei jeder Vektor eine Anzahl n von Bits aufweist, die jeweils die von der entsprechenden Warteschlange belegten Positionen des Speicherplatzes angeben,
- einen Schaltkreis (PL), um ausgehend von den Zugehörigkeitsvektoren (DT1, DT2), einen Vektor (TABIN) für die Benutzung des Speicherplatzes festzulegen, wobei jedes seiner Bits den Status (frei oder belegt) einer entsprechenden Position des Speicherplatzes angibt,
- ein Schreibzeiger-Register (DE), das die binärcodierte Adresse der Position des Speicherplatzes speichert, wo der letzte Schreibvorgang erfolgte, und
- eine kombinatorische Logikschaltung (LC) zur Ermittlung des nächsten Nachfolgers gemäß einer zyklischen Ordnungsbeziehung aller in dem Speicherplatz verfügbaren Grundressourcen, zur Bestimmung:
• der Adresse einer freien Position, die den nächsten Nachfolger der Position bildet, in der der letzte Schreibvorgang erfolgte, durch Gegenüberstellung des Inhaltes des Schreibzeiger-Registers (DE) und der Adressen der von dem Benutzungsvektor (TABIN) angezeigten freien Positionen vor jedem Schreiben in eine bestimmte Warteschlange, und
• der Adresse einer belegten Position, die den nächsten Nachfolger der Position bildet, die zuletzt in der bestimmten Warteschlange gelesen wurde, durch Gegenüberstellung des Inhaltes des der bestimmten Warteschlange entsprechenden Lesezeiger-Registers (DL1, DL2) und der Adressen der von der bestimmten Warteschlange belegten Positionen, die von dem Zugehörigkeitsvektor (DT1, DT2) der bestimmten Warteschlange angezeigt werden, vor jedem Lesen einer bestimmten Warteschlange,
- Logikmittel zum Starten des Speicherns der von dem kombinatorischen Logikschaltkreis (LC) bestimmten Adresse vor jedem Schreiben in das Schreibzeiger-Register (DE) und vor jedem Lesen des Lesezeiger-Registers (DL1, DL2), das der zu lesenden Warteschlange entspricht, und
- Mittel zur Durchführung der Aktualisierung des Zugehörigkeitsvektors (DT1, DT2), welcher der Warteschlange entspricht, die gerade Gegenstand des letzten Schreibens oder Lesens war, und des Benutzungsvektors (TABIN) nach jedem Lese- oder Schreibvorgang in einer Warteschlange.

2. Vorrichtung nach Anspruch 1, dadurch gekennzeichnet, daß die Adresse der belegten Position des Speicherplatzes, die Gegenstand des letzten Schreibvorgangs war, dem kombinatorischen Logikschaltkreis (LC) mittels eines Wandlers (DEC) in Form eines Binärelements mit n Bits von n, die als 1 codiert sind, präsentiert wird, wobei n die Anzahl von Speicherpositionen des den Warteschleifen zugewiesenen Speicherplatzes ist.

3. Vorrichtung nach Anspruch 2, dadurch gekennzeichnet, daß sich der kombinatorische Logikschaltkreis (LC) aus n Grundschaltkreisen zusammensetzt, deren jeder die Kombination der folgenden Elemente oder eine funktionell äquivalente Kombination aufweist:
- ein erstes UND-Gatter (E₁), dessen einer Eingang über einen Inverter (I₁) mit einem der n Ausgänge (TABIN) eines Schaltkreises (PL) zur Bestimmung der freien Positionen des Speicherplatzes verbunden ist, dessen zweiter Eingang (chain (i)) an einen Ausgang (chain(i+1)) des vorherigen Grundschaltkreises angeschlossen ist, wobei der Ausgang (chain(n)) des letzten Grundschaltkreises mit dem Eingang (chain(0)) des ersten Grundschaltkreises verbunden ist,
- ein ODER-Gatter, dessen einer Eingang mit dem Ausgang des ersten UND-Gatters verbunden ist und dessen anderer Eingang mit einem der n Ausgänge des Wandlers (DEC) verbunden ist, wobei der Ausgang dieses ODER-Gatters den Ausgang (chain(i+1)) bildet, der mit dem Eingang (chain(i)) des nächsten Grundschaltkreises verbunden ist, und
- ein zweites UND-Gatter, dessen einer Eingang über einen Inverter (I₂) mit dem Ausgang des ODER-Gatters verbunden ist und dessen anderer Eingang mit dem zweiten Eingang (chain(i)) des ersten Schaltkreises verbunden ist.

4. Vorrichtung nach Anspruch 3 zur Verwaltung von wenigstens zwei Warteschlangen, dadurch gekennzeichnet, daß sie wenigstens zwei Zugehörigkeitsvektoren (DT₁, DT₂) in einem Verhältnis von einem pro verwalteter Warteschlange, die jeweils die Positionen des Speicherplatzes anzeigen, die von der entsprechenden Warteschlange belegt sind, und deren gleichrangige Ausgänge einerseits mit den zwei entsprechenden Eingängen eines komplementierten ODER-Gatters (OC) und andererseits mit den zwei Eingängen eines Kanalwählers (SV₂) verbunden sind, und daß die Ausgänge des komplementierten ODER-Gatters (OC) und dieses Kanalwählers (SV₂) mit den beiden Eingängen eines zweiten Lese-/Schreib-Wählers (SLE₂) verbunden sind, und ferner daß der Ausgang des Lese-/-Schreib-Wählers (SLE₂) mit einem entsprechenden Eingang (TABIN) des kombinatorischen Logikschaltkreises verbunden ist.

5. Vorrichtung nach Anspruch 1, dadurch gekennzeichnet, daß der Ausgang (TABOUT) des kombinatorischen Logikschaltkreises (LC) über einen Encoder (COD) zum Codieren von einem Bit unter 32 zu fünf Bit an das Lesezeiger-Register (DE) und an die Lesezeiger (DL₁, DL₂) angelegt wird, wobei der Ausgang dieser Register mit dem Eingang (REF) des kombinatorischen Logikschaltkreises über einen Weichenschaltkreis verbunden ist, der wenigstens einen Kanalwähler (SV₁) und einen Lese-/Schreib-Wähler (SLE₁), gefolgt von einer Einrichtung (DEC) zur 5/32-Bit-Umwandlung in einem Verhältnis von einem Bit unter 32 mit dem Zustand 1.

6. Verfahren zur Verwaltung mehrerer unabhängiger Warteschlangen in einem gemeinsamen und vereinfachten Speicherplatz ohne vorrangige statische Zuordnung eines Teils des jeder Warteschlange zugewiesenen Platzes, wobei dieses Verfahren mit
- einer Gruppe von Lesezeiger-Registern (DL1, DL2) in einem Verhältnis von einem pro Warteschlange arbeitet, wobei jeder dieser Zeiger die binärcodierte Adresse der letzten Position speichert, die von dem von der entsprechenden Warteschlange benutzten Speicherplatz gelesen wurde,
dadurch gekennzeichnet, daß es ebenso arbeitet mit:
- einer Gruppe von Vektoren (DT1, DT2) für die Zugehörigkeit des Speicherplatzes zu jeder Warteschlange in einem Verhältnis von einem Vektor pro Warteschlange, wobei jeder Vektor eine Anzahl n von Bits aufweist, die jeweils die von der entsprechenden Warteschlange belegten Positionen des Speicherplatzes angeben,
- einem Vektor für die Benutzung des von den vorhergehenden Vektoren (DT1, DT2) abgeleiteten Speicherplatzes, wobei jedes seiner Bits den Status, d.h. frei oder belegt, einer entsprechenden Position des Speicherplatzes angibt,
- einem Schreibzeiger-Register (DE), das die binärcodierte Adresse der Position des Speicherplatzes speichert, wo der letzte Schreibvorgang erfolgte, und ferner dadurch gekennzeichnet, daß es die folgenden Sequenzen umfaßt:
- eine Sequenz zum Schreiben in einer bestimmten Warteschlange, umfassend die Berücksichtigung der von dem Lesezeiger (DE) angezeigten Adresse der belegten Position des Speicherplatzes, in welcher der letzte Schreibvorgang erfolgte, den Vergleich dieser Adresse mit den Adressen der freien Positionen des Speicherplatzes, die durch den Benutzungsvektor (TABIN) angezeigt werden, um die Adresse einer freien Position zu bestimmen, die gemäß einer zyklischen Ordnungsbeziehung aller in dem Speicherplatz verfügbaren Grundressourcen den nächsten Nachfolger der belegten Position darstellt, die Zuordnung der Adresse dieser freien Position zu dem Schreibzeiger (DE), das Schreiben unter dieser Adresse, die anschließende Aktualisierung des Zugehörigkeitsvektors (DT1, DT2), welcher der bestimmten Warteschlange entspricht, und des Benutzungsvektors (TABIN), umfaßt,
- eine Sequenz zum Lesen in einer bestimmten Warteschlange, umfassend die Berücksichtigung der Position des letzten in der bestimmten Warteschlange gelesenen Wortes, das von dem Lesezeiger (DL1, DL2) angezeigt wird, welcher der bestimmten Warteschlange entspricht, die Suche nach dem nächsten Nachfolger dieser letzten Position gemäß der zyklischen Ordnungsbeziehung unter den von der Warteschlange belegten Positionen des Speichers, die von dem Zugehörigkeitsvektor (DT1, DT2) angezeigt werden, welcher der bestimmten Warteschlange entspricht, die Zuordnung der Adresse dieser Position zu dem Lesezeiger (DL1, DL2), welcher der bestimmten Warteschlange entspricht, um zum Lesen dieser Position des Speicherplatzes überzugehen, und parallel dazu die Aktualisierung des Zugehörigkeitsvektors (DT1, DT2), welcher der bestimmten Warteschlange entspricht, und des Benutzungsvektors (TABIN).

## Claims

1. A management device for a plurality of independent queues in a common non-dedicated memory space with no a priori static allocation of part of the memory space to each queue, this device using :
- a set of read pointer registers (DL1, DL2), one per queue, each of said pointers holding the binary coded address of the location of the memory space last read used by the corresponding queue,
Characterised in that it comprises :
- a set of belonging vectors (DT1, DT2) indicating the memory space in each queue, one register per queue, each vector including a number n of bits indicating respectively the locations of the memory space occupied by the corresponding queue,
- a circuit (PL) to determine, from the belonging vectors (D1, D2), a use vector (TABIN) of the memory space, of which each of the bits indicates the free or occupied status of a respective location of the memory space,
- a write pointer register (DE) which holds the binary coded address of the location of the memory space where took place the last write operation,
- a logic combinatorial circuit (LC) for determining the closest successor based on a cyclical order relationship of the set of available unit resources in the memory space to estimate :
- before each write operation in a given queue, the address of a free location constituting the closest successor of the location last written by comparing the write pointer register (DE) contents with the addresses of the free locations indicated by the use vector (TABIN), and
- before each read operation in a given queue, the address of an occupied location constituting the closest successor of the locations last read in the given queue, by comparing the read pointer register contents (DL1,DL2) corresponding to the given queue, with the addresses of the location occupied by the given queue indicated by the belonging vector (DT1, DT2) of said given queue,
- logic means to initiate the determined address memorisation by the combinatorial logic circuit (LC), before each write operation in the write pointer register (DE), and before each read operation in the read pointer register (DL1,DL2) corresponding to the queue to be read, and
- means for updating, following each read or write operation in a queue, the belonging vector (DT1, DT2) corresponding to the queue object of the last write or read operation, and of the use vector (TABIN).

2. Device according to claim 1, characterised in that the address of the occupied location of the memory space, object of the last write operation is presented to the combinatorial logic circuit (LC) via a converter (DEC) in the form of a binary number of n bits coding in 1 from n, where n is the number of memory locations allocated to the queues.

3. Device according to claim 2, characterised in that the combinatorial logic circuit (LC) comprises n unit circuits including the combination of the following elements or an equivalent combination :
- a first AND gate (E1) of which one input is connected via an inverter (I₁), to one of n outputs (TABIN) of a circuit (PL) for determining free locations of the memory space whose second input (chain(i)) is looped to an output (chain(i+ 1)) of the previous unit circuit, the output (chain(n)) of the last unit circuit being looped back on the input (chain(0)) of the first unit circuit,
- an OR gate of which one input is connected to the output of the first AND gate and whose other input is connected to one of the n outputs of the converter (DEC), the output of said OR gate constituting the output (chain(i + 1)) which is connected to the input (chain(i)) of the next unit circuit, and
- a second AND gate of which one input is connected to the output of the OR gate via an inverter (I2) and whose other input is connected to the second input (chain(i)) of the first circuit.

4. Device according to claim 3 for managing at least two queues, characterised in that it comprises at least two belonging vectors (DT1, DT2), one for each queue managed, each indicating the locations of the memory space occupied by the corresponding queue, and whose same-rank outputs are connected to the two respective inputs of a NOR circuit (OC) and to the two inputs of a channel selector (SV₂), in that the outputs of said NOR gate (OC) and said channel selector (SV₂) are connected to the two inputs of a second read/write selector (SLE₂), and in that the output of said second read/write selector (SLE₂) is connected to a corresponding input (TABIN) of the combinatorial logic circuit (LC).

5. Device according to claim 1 characterised in that the output (TABOUT) of the combinatorial logic circuit (LC) is connected via an encoder (COD) of one bit from thirty-two towards five bits to the write pointer register (DE) and to the read pointers (DL1, DL2), the output of said registers being connected to the input (REF) of the combinatorial logic circuit via a routing circuit comprising at least one channel selector (SV₁) and one read/write selector (SLE₁) followed by a converter device (DEC) of five bits towards thirty-two bits, one bit at the state of one from thirty-two.

6. Management method for multiple independent queues in a common non-dedicated memory space, with no a priori static allocation of part of the space allocated to each queue, this method using a set of read pointer registers (DL1, DL2) with one per queue, each of said pointers holding the binary coded address of the last read location of the memory space used by the corresponding queue, characterised in that it also uses :
- a set of vectors (DT1, DT2) indicating the memory space belonging to each queue, one per queue, each vector including a number n of bits indicating respectively the locations of the memory space occupied by the corresponding queue,
- a use vector of the memory space, deduced from the preceding vector (DT1, DT2) each bit of which indicates the free or occupied status of a respective location of the memory space,
- a write pointer register (DE) which stores the binary coded address of the memory location last written,
And in that it includes the following sequences :
- a sequence of writing in a given queue including registering of the address indicated by the write pointer (DE), of the occupied location of the memory space where the last write operation took place, the comparison of said address with the free location addresses of the memory space, indicated by the use vector (TABIN), to determine the free location address constituting the closest successor of the said location, based on a cyclical order relationship of the set unit resources available in the memory space, the allocation of the free location address to the write pointer (DE), the write operation to this address, then the update of the belonging vector (DT1, DT2) corresponding to the given queue and, of the use vector (TABIN),
- a read sequence in a given queue, including registering of the location of the last word read in the given queue, indicated by the read pointer (DL1, DL2) corresponding to the given queue, the research, among the locations of the memory space occupied by the queue, indicated by the belonging vector (DT1, DT2), corresponding to the given queue, of the closest successor based on a cyclical order relationship, to this last location, the address allocation of this position to the read pointer (DL1, DL2) corresponding to the given queue, in order to read this location of the memory space and, in parallel, update the belonging vector (DT1, DT2) corresponding to the use vector (TABIN).
